# EUROPÄISCHE PATENTSCHRIFT

(11) **EP 1 374 488 B1**
(45) Veröffentlichungstag und Bekanntmachung des Hinweises auf die Patenterteilung: **27.10.2004**
(21) Anmeldenummer: 02737759.7
(22) Anmeldetag: 28.03.2002
(51) Int. Cl.: H04L 12/40, B60R 21/01

(54) **BUSMASTER FÜR EINEN BUS ZUM ANSCHLUSS VON SENSOREN UND/ODER ZÜNDMITTELN**
BUS MASTER FOR A BUS FOR CONNECTING SENSORS AND/OR FIRING MEANS
BUS MAITRE DESTINE A UN BUS POUR LE RACCORDEMENT DE CAPTEURS ET/OU DE MOYENS D'ALLUMAGE

(30) Priorität: 29.03.2001 DE 10115409
(43) Veröffentlichungstag der Anmeldung: 02.01.2004
(73) Patentinhaber: ROBERT BOSCH GMBH, 70442 Stuttgart (DE); Conti Temic Microelectronic GmbH, 90411 Nürnberg (DE); Siemens AG, 80506 München (DE)
(72) Erfinder: NITSCHKE, Werner, 71254 Ditzingen (DE); MEIER, Klaus-Dieter, 71229 Leonberg (DE); BALZER, Knut, 71717 Beilstein (DE); MAURITZ, Ewald, 71287 Weissach (DE); BUEHRING, Heiko, 26125 Oldenburg (DE); BOGENRIEDER, Hans, 85077 Manching (DE); PFAFFENEDER, Bernd, 93138 Lappersdorf (DE); WULFF, Holger, 85051 Ingolstadt (DE)
(86) Internationale Anmeldenummer: PCT/DE2002/001142
(87) Internationale Veröffentlichungsnummer: WO 2002/080463

(56) Entgegenhaltungen:
- EP-A- 0 507 428
- WO-A-91/17609
- DE-A- 4 242 438
- DE-A- 4 401 785
- DE-C- 19 525 180

## Beschreibung

### Stand der Technik

Die Erfindung geht aus von einem Busmaster für einen Bus zum Anschluß von Sensoren und/oder Zündmitteln nach der Gattung des unabhängigen Patentanspruchs, beispielsweise gemäß der EP-A-0 507 428.

Aus der US-Patentschrift US-5 964 815 A ist bereits ein Bussystem bekannt, das einen Busmaster oder Buscontroller aufweist, wobei an den Bus Zündmittel und Sensoren anschließbar sind.

Aus dem Konferenzbeitrag K. Balzer et al.: BST Deployment and Sensor Bus, Airbag 2000, 5.12.2000, abgedruckt im Konferenzband, S. 12-1 bis 12-5, ist ein weiteres Bussystem bekannt, an das Sensoren und/oder Zündmittel anschließbar sind. Es handelt sich dabei um ein Master/Mulit-Slave-System, wobei eine Zweidrahtleitung als Busleitung verwendet wird. Darüber hinaus findet eine Modulation durch die Slaves der Energiezufuhr, die vom Master über den Bus übertragen wird, statt, wenn die Slaves ihre Daten über den Bus senden. Der Master sendet eine Anfrage an einen Slave, um Daten von ihm zu bekommen. Der Slave moduliert dann seine Energieaufnahme, um die Antwort an den Master zu erzeugen.

### Vorteile der Erfindung

Der erfindungsgemäße Busmaster für einen Bus zum Anschluß von Sensoren und/oder Zündmitteln mit den Merkmalen des unabhängigen Patentanspruchs hat demgegenüber den Vorteil, dass nun gleichzeitig und unabhängig voneinander empfangene Daten von den wenigstens zwei Bustreibern im Busmaster verarbeitet und ausgewertet werden können. Diese getrennte Auswertung erlaubt die Verdoppelung der Bandbreite bei der Beibehaltung der Datenübertragungsrate. Weiterhin ist es möglich, alle bisherigen Buselemente einzusetzen, wobei der erfindungsgemäße Busmaster in beliebigen Buskonfigurationen also Ring, Stich, Daisy-Chain oder parallel bzw. gemischte Strukturen einsetzbar ist.

Durch die in den abhängigen Ansprüchen aufgeführten Maßnahmen und Weiterbildungen sind vorteilhafte Verbesserungen des im unabhängigen Patentanspruch angegebenen Busmasters möglich.

Besonders vorteilhaft ist, dass den wenigstens zwei Bustreibern ein erster Multiplexer zugeordnet ist, mit dem alternierend die über dem Bus empfangenen Daten an einen einzigen Demodulator für beide Bustreiber weitergeleitet werden. Dies entspricht einem Polling-Betrieb. Damit ist es vorteilhafterweise möglich, nur einen Demodulator für die Daten, die von beiden Bustreibern empfangen wurden, zu verwenden. Dies vereinfacht den Aufbau des erfindungsgemäßen Busmasters. Durch die Verwendung eines Pufferspeichers ist es möglich, dass die einzelnen Daten jeweils nicht verloren gehen.

Alternativ ist es möglich, einem jeweiligen Bustreiber einen eigenen Demodulator zuzuordnen. Damit ist eine völlige Unabhängigkeit der Datenverarbeitung gewährleistet.

Darüber hinaus ist es von Vorteil, dass den jeweiligen Bustreibern entweder gemeinsam ein Prozessor als State-Machine zugeordnet ist, der aus den an den Busleitungen gemessenen Signalen einen Systemzustand für den jeweiligen Bustreiber ermittelt, wobei die einzelnen Bustreiber hier wieder über einen zweiten Multiplexer diese Meßsignale an den Prozessor übermitteln. Alternativ ist es möglich, dass jedem Bustreiber ein Prozessor zur Bestimmung des Systemzustands zugeordnet wird. Als Systemzustand werden hier die Bustreiberzustände Empfang, Senden, Idle oder Fehlerbehandlung verstanden. Für den Zustand Empfang erkennt der Prozessor anhand von einer Strommodulation auf den Busleitungen, dass Daten von den über den Bus angeschlossenen Sensoren und/oder Zündmitteln übertragen werden und somit der jeweilige Bustreiber auf Empfang zu schalten ist. Ist kein strommoduliertes Signal auf den Busleitungen zu erkennen, dann stellt der Prozessor entweder den Systemzustand Senden ein, wenn der Busmaster Daten zu den Sensoren und/oder Zündmitteln versenden will oder Idle, wenn der Busmaster keine Daten zum Senden hat. Ein weiterer Zustand umfasst die Fehlerbehandlung, die beispielsweise bei einem Kurzschluß oder einer Unterbrechung der Busleitung vorgenommen werden muß. Dabei ist es möglich, bei einer Zweidrahtleitung als dem Bus die Leitungen auszutauschen oder beispielsweise eine Unterbrechung zu isolieren.

### Zeichnung

Ausführungsbeispiele der Erfindung sind in der Zeichnung dargestellt und werden in der nachfolgenden Beschreibung näher erläutert. Es zeigt Figur 1 ein Blockschaltbild eines Bussystems mit einem erfindungsgemäßen Busmaster, Figur 2 ein erstes Blockschaltbild des erfindungsgemäßen Busmasters und Figur 3 ein zweites Blockschaltbild des erfindungsgemäßen Busmasters.

### Beschreibung

Bei einem Zünd- und/oder Sensorbus für Fahrzeugrückhaltesysteme (Airbag und Gurtstraffer) werden als Konfiguration beispielsweise eine Ring- oder unterschiedliche Stichleitungen verwendet. Für einen Anschluß einer Ring- und/oder für eine Mehrzahl von Stichleitungen ist es notwendig, wenigstens zwei Bustreiber im Busmaster vorzusehen.

Um nun bei zukünftigen Sensorapplikationen eine größere Bandbreite bereitzustellen, wird erfindungsgemäß vorgesehen, dass jeder Bustreiber unabhängig und gleichzeitig von anderen Bustreibern Daten empfangen kann. Dies wird erfindungsgemäß dadurch erreicht, dass entweder einem jeweiligen Bustreiber ein eigener Demodulator zugeordnet wird oder sich unterschiedliche Bustreiber einen Demodulator durch die Zwischenschaltung eines Multiplexers teilen. Dabei ist es auch möglich, dass eine Mischform bei mehr als zwei Bustreibern vorgenommen wird. Beispielsweise wird für eine Busleitung, die einen sehr starken Datenverkehr erwartet, ein eigener Demodulator vorgesehen, während andere Busleitungen, wo weniger Datenverkehr zu erwarten ist, sich die angeschlossenen Bustreiber einen Demodulator teilen.

Im gemeinsamen Sensor- und Zündbuskonzept von der Robert Bosch GmbH, der Temic Telefunken microelectronic GmbH und der Siemens Automobiltechnik AG werden die Daten im Polling-Betrieb erfindungsgemäß von verschiedenen Bustreibern gleichzeitig und unabhängig voneinander ausgewertet. Dies ermöglicht die Verdoppelung der Bandbreite unter Einhaltung einer vorgegebenen Datenübertragungsrate. Es ist also nicht notwendig, für eine größere Bandbreite die Übertragungsrate zu erhöhen.

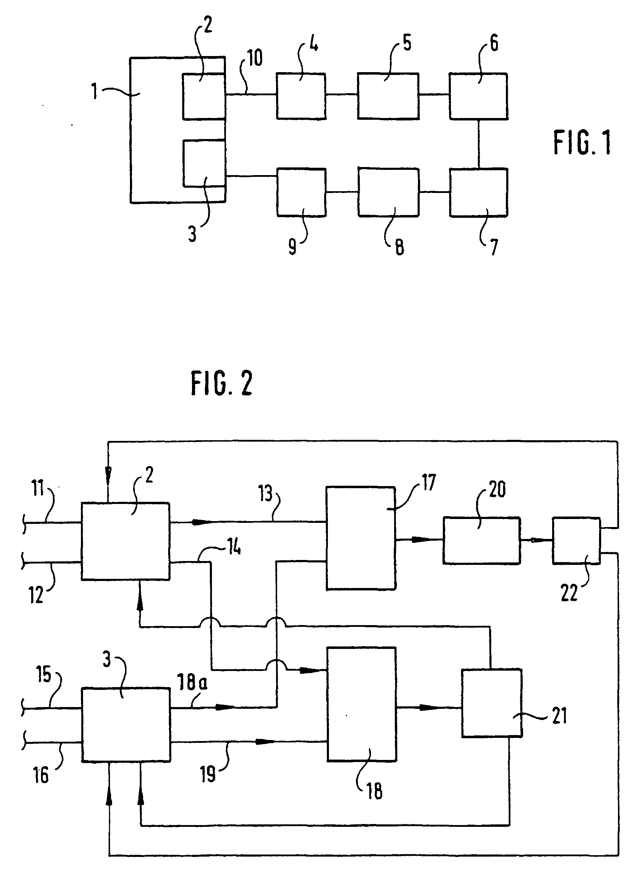

Figur 1 zeigt als Blockschaltbild einen erfindungsgemäßen Busmaster in einem Ringbussystem. Der erfindungsgemäße Busmaster 1 weist zwei Bustreiber 2 und 3 auf, die an eine Ringbusleitung 10 angeschlossen sind. In dem Ringbus sind Sensoren 4 und 9 sowie Zündmittel 5, 6, 7 und 8 angeschlossen. Als Sensoren werden hier Aufprallsensoren verwendet, wie es Beschleunigungs-, Druck- oder Temperatursensoren sind. Die Zündmittel 5, 6, 7 und 8 werden dazu verwendet, Rückhaltemittel wie Airbags oder Gurtstraffer zu zünden. Diese Zündung geschieht, wenn die Sensoren 4 und 9 eine Aufprallsituation detektieren und dies zu einer Auslöseentscheidung führt. Die Auslöseentscheidung kann in einem zentralen Steuergerät, beispielsweise im Busmaster 1 oder verteilt in den einzelnen Zündmitteln 5, 6, 7 und 8 selbst getroffen werden. Die Daten werden hier über die Busleitung 10 mittels einer Strommodulation übertragen, wobei eine Manchestercodierung eingesetzt wird. Es wird hier als Busleitung 10 eine Zweidrahtleitung verwendet, wobei die Busleitung hier auch als Energieversorgung für die Busstationen 4 bis 9 eingesetzt wird. Damit liegt eine Powerline-Datenübertragung vor. Es ist alternativ möglich, eine separate Energieversorgung vorzusehen. Auch eine Ausführung der Busleitung 10 als Eindrahtleitung ist möglich.

Figur 2 zeigt nun als Blockschaltbild den Aufbau des erfindungsgemäßen Busmasters 1. Die Busleitung 10 wird hier als Zweidrahtleitung dargestellt mit den Leitungen 11 und 12 sowie 15 und 16. Der Bustreiber 2 überträgt empfangene Daten über eine Leitung 13 an einen Multiplexer 17. Auch der Bustreiber 3 überträgt über eine Leitung 18 an den Multiplexer 17 empfangene Daten. Der Multiplexer 17 schaltet diese Daten alternierend zu einem einzigen Demodulator 20, so dass der Demodulator 20 die Demodulation der Daten vornehmen kann. Von den Sensoren 4 und 9 werden Sensowerte als Daten an den Busmaster 1 übertragen und von den Zündmitteln Diagnosedaten, die Auskunft darüber geben, ob die Zündmittel noch funktionsfähig sind.

Dem Demodulator 20 ist eine Auswerteeinheit 22 nachgeschaltet, die die demodulierten Daten auswertet. In Abhängigkeit von der Auswertung überträgt die Auswerteeinheit 22 über einen ersten Datenausgang zu dem Bustreiber 2 gegebenenfalls eine Antwort oder Reaktion, die dann über die Busleitung 10 übertragen wird. Das gleiche führt die Auswerteeinheit 22 über einen zweiten Datenausgang gegebenenfalls zu dem Bustreiber 3 aus. Die Auswerteeinheit 22 ist hier ein Prozessor eines Steuergerät, der einen Auslösealgorithmus mit den über den Bus empfangenen Sensordaten berechnet. Die Antwort und Reaktion der Auswerteeinheit 22 ist demnach in einem Auslösefall ein Auslösebefehl an wenigstens eines der Zündmittel 5-8. Mit den empfangenen Diagnosedaten von den Zündmitteln wird überprüft, ob die Zündmittel noch funktionsfähig sind. Diese Funktion gilt auch für die weiteren beschriebenen Auswerteeinheiten.

Ober eine Leitung 14 überträgt der Bustreiber 2 Meßgrößen der Busleitung 10 zu einem zweiten Multiplexer 18. Dies führt der Bustreiber 3 über die Leitung 19 aus. Als Meßgrößen gelten der Stromverbrauch am sogenannten Highside-Anschluß des Treibers 2, also die positiv vorgespannte Leitung 11, der Stromverbrauch am Lowside-Anschluß des Treibers 3, das ist also der Masseanschluß des Busses 10, sowie der Modulationsstrom und Spannung am Bus 10. Der Multiplexer 18 schaltet diese Betriebskenngrößen zu einem Prozessor 21, der hier als eine State-Machine wirkt, wobei der Prozessor 21 in Abhängigkeit von diesen Meßgrößen den Systemzustand sowohl des Treibers 2 als auch des Treibers 3 bestimmt. Dafür ist der Prozessor 21 über einen ersten Datenausgang mit dem Bustreiber 2 und über einen zweiten Datenausgang mit dem Bustreiber 3 verbunden.

Es ist möglich, dass in einem Bussystem gemäß Figur 1 mehrere Busmaster verwendet werden, wobei sogar ein Multimaster-Bussystem möglich ist. Darüber hinaus ist es möglich, dass anstatt eines Ringbuskonzepts auch verschiedene Busleitungen verwendet werden. Weiterhin ist das sogenannte Daisy-Chain möglich, das ist also ein serieller Bus oder auch ein paralleler Bus. Darüber hinaus ist der erfindungsgemäße Busmaster auch in gemischten Busstrukturen einsetzbar.

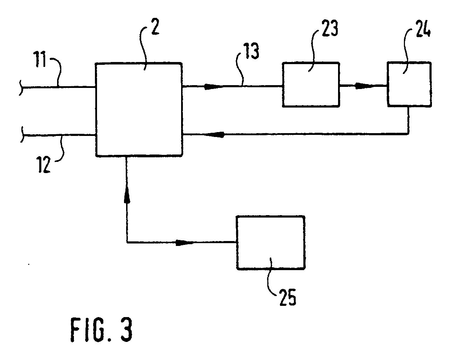

Figur 3 zeigt als Blockschaltbild einen Ausschnitt des Busmasters 1, der allein den Bustreiber 2 betrifft. An den Bustreiber 2 ist wieder die Busleitung 10 mit den einzelnen Leitungen 11 und 12 angeschlossen. Über die Leitung 13 überträgt der Bustreiber 2 empfangene Daten an einen Demodulator 23, der die demodulierten Daten dann einer Auswertung 24 überträgt, die gegebenenfalls in Abhängigkeit von der Auswertung dem Bustreiber 2 solche Antwortdaten überträgt, die der Bustreiber 2 dann über den Bus 10 zu weiteren Busstationen versendet.

Ober einen Datenein-/-ausgang ist der Bustreiber 2 mit einem Prozessor 25 verbunden, der in Abhängigkeit von den vom Bustreiber 2 ermittelten Meßgrößen der Busleitung 10 den Zustand des Bustreibers 2 bestimmt. Als Systemzustände werden hier Empfang, Senden, Idle und Fehlerbehandlung angesehen.

## Patentansprüche

1. Busmaster für eine Busleitung (10) zum Anschluss von Aufprallsensoren (4, 9) und/oder Zündmitteln (5 bis 8), wobei der Busmaster (1) mit ihm zugeordneten wenigstens zwei Bustreibern (2, 3) über die Busleitung (10) mit den Aufprallsensoren (4, 9) und/oder Zündmitteln (5 bis 8) verbindbar ist, **dadurch gekennzeichnet, dass** zur Vergrößerung der Bandbreite mit den wenigstens zwei Bustreibem unabhängig voneinander und gleichzeitig Daten über die Busleitung (10) empfangbar sind.

2. Busmaster nach Anspruch 1, **dadurch gekennzeichnet, dass** den wenigstens zwei Bustreibern (2, 3) ein erster Multiplexer (17) zur alternierenden Zuführung von über den Bus (10) mit den wenigstens zwei Bustreibern (2, 3) empfangenen Daten an einen Demodulator (20) nachgeschaltet ist.

3. Busmaster nach Anspruch 1, **dadurch gekennzeichnet, dass** den wenigstens zwei Bustreibern (2, 3) jeweils ein Demodulator (23) zugeordnet ist.

4. Busmaster nach Anspruch 2 oder 3, **dadurch gekennzeichnet, dass** den wenigstens zwei Bustreibern (2, 3) ein Prozessor (21) zugeordnet ist, dem ein zweiter Multiplexer (18) vorgeschaltet ist, um in Abhängigkeit von an der Busleitung (10) gemessenen Größen alternierend einen jeweiligen Systemzustand der wenigstens zwei Bustreiber (2, 3) zu bestimmen.

5. Busmaster nach Anspruch 2 oder 3, **dadurch gekennzeichnet, dass** den wenigstens zwei Bustreibern (2, 3) jeweils ein Prozessor (25) zugeordnet ist, der in Abhängigkeit von an der Busleitung (10) gemessenen Größen den Systemzustand des jeweiligen Bustreibers (2, 3) bestimmt.

## Claims

1. Bus master for a bus line (10) for connecting impact sensors (4, 9) and/or initiation means (5 to 8), with it being possible for the bus master (1) to be connected by means of at least two associated bus drivers (2, 3) to the impact sensors (4, 9) and/or initiation means (5 to 8) via the bus line (10), **characterized in that**, in order to increase the bandwidth, the at least two bus drivers can be used to receive data independently of one another and simultaneously via the bus line (10).

2. Bus master according to Claim 1, **characterized in that** a first multiplexer (17) for alternately supplying a demodulator (20) with data received via the bus (10) using the at least two bus drivers (2, 3) is connected downstream of the at least two bus drivers (2, 3).

3. Bus master according to Claim 1, **characterized in that** the at least two bus drivers (2, 3) each have an associated demodulator (23).

4. Bus master according to Claim 2 or 3, **characterized in that** the at least two bus drivers (2, 3) have an associated processor (21) which has a second multiplexer (18) connected upstream of it in order to alternately determine a respective system state of the at least two bus drivers (2, 3) as a function of variables measured on the bus line (10).

5. Bus master according to Claim 2 or 3, **characterized in that** the at least two bus drivers (2, 3) each have an associated processor (25) which determines the system state of the respective bus driver (2, 3) as a function of variables measured on the bus line (10).

## Revendications

1. Bus maître destiné à une ligne bus (10) pour le raccordement de capteurs de choc (4, 9) et/ou de moyens d'allumage (5 à 8), le bus maître (1) pouvant, avec au moins deux circuits de commande (2, 3) qui lui sont associés, être relié par la ligne bus (10), aux capteurs de choc (4, 9) et/ou moyens d'allumage (5 à 8),
**caractérisé en ce que**
pour augmenter la largeur de bande, des données peuvent être reçues par la ligne bus (10), à l'aide des au moins deux circuits de commande indépendamment l'un de l'autre et simultanément.

2. Bus maître selon la revendication 1,
**caractérisé en ce qu'**
un premier multiplexeur (17), qui permet de conduire alternativement, vers un démodulateur (20), les données reçues par le bus (10) à l'aide des au moins deux circuits de commande (2, 3), est placé après les au moins deux circuits de commande (2, 3).

3. Bus maître selon la revendication 1,
**caractérisé en ce qu'**
un démodulateur (23) est respectivement associé aux au moins deux circuits de commande (2, 3).

4. Bus maître selon la revendication 2 ou 3,
**caractérisé en ce qu'**
un processeur (21) est associé aux au moins deux circuits de commande (2, 3), un deuxième multiplexeur (18) étant placé avant ce processeur, afin, en fonction des grandeurs mesurées au niveau de la ligne bus (10), de déterminer alternativement un état de système respectif des au moins deux circuits de commande (2, 3).

5. Bus maître selon la revendication 2 ou 3,
**caractérisé en ce qu'**
un processeur (25) est respectivement associé aux au moins deux circuits de commande (2, 3), et détermine en fonction des grandeurs mesurées au niveau de la ligne bus (10) l'état de système du circuit de commande respectif (2, 3).
